(19) Europäisches Patentamt
European Patent Office
Office européen des brevets

(11) EP 2 611 844 B1

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **11749195.1**

(22) Anmeldetag: **31.08.2011**

(51) Int Cl.:
***C08F 265/02*** (2006.01) ***C09D 4/00*** (2006.01)
***C09D 133/06*** (2006.01) ***C09D 151/00*** (2006.01)
***C08K 5/132*** (2006.01) ***C09D 5/02*** (2006.01)

(86) Internationale Anmeldenummer:
**PCT/EP2011/064938**

(87) Internationale Veröffentlichungsnummer:
**WO 2012/028627 (08.03.2012 Gazette 2012/10)**

(54) **WÄSSRIGE EMULSIONSPOLYMERISATE, DEREN HERSTELLUNG UND VERWENDUNG**
AQUEOUS EMULSION POLYMERS, PREPARATION THEREOF AND USE
EMULSION AQUEUSE DE POLYMÈRES, PREPARATION ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2010 EP 10174912**

(43) Veröffentlichungstag der Anmeldung:
**10.07.2013 Patentblatt 2013/28**

(73) Patentinhaber: **BASF SE**
**67056 Ludwigshafen (DE)**

(72) Erfinder:
- **BALK, Roelof**
  **67459 Böhl-Iggelheim (DE)**
- **DERSCH, Rolf**
  **67434 Neustadt (DE)**
- **ROLLER, Sebastian**
  **68167 Mannheim (DE)**
- **SCHULER, Bernhard**
  **68199 Mannheim (DE)**

(56) Entgegenhaltungen:
**EP-A2- 0 417 568** **WO-A1-92/14763**
**WO-A1-95/20016** **WO-A1-2010/112474**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 611 844 B1

Printed by Jouve, 75001 PARIS (FR)

## Beschreibung

Gegenstand der vorliegenden Erfindung sind Anstrichmittel enthaltend wässrige Emulsionspolymerisate enthaltend

(A) Monomere A
(B) mindestens ein (Meth)acrylat mit olefinisch ungesättigten Seitengruppen (Monomere B) sowie
(C) mindestens einen Photoinitiator sowie anorganische Füllstoffe.

Gegenstand der vorliegenden Erfindung ist ebenfalls und die Verwendung der erfindungsgemäßen Anstrichmittel, insbesondere in Fassadenfarben. Die Anstrichmittel, können dabei sowohl frei von organischen Lösemitteln sein, als auch organische Lösemittel enthalten. Eine weitere Ausführungsform der Erfindung sind Anstrichmittel, die erfindungsgemäße Polymerdispersionen mit Glasübergangstemperaturen < 0°C als Bindemittel enthalten für elastische, rissüberbrückende Beschichtungen. Beschichtungen auf Basis der vorstehend beschriebenen Anstrichmittel zeichnen sich durch eine verbesserte Anschmutzresistenz aus.

Beschichtungen im Außenbereich, beispielsweise an Fassaden sind Wind und Wetter ausgesetzt und nehmen im Laufe der Zeit Schmutzpartikel aus der Umgebung an. Derart angeschmutzte Beschichtungen sind durchaus noch in der Lage, den Untergrund, sei es Putz oder Mauerwerk vor Witterungseinflüssen zu schützen. Häufig werden Fassadenanstriche aber erneuert, weil sie durch Verschmutzung grau und unansehnlich geworden sind. Das führt zu erhöhten Kosten für die Instandhaltung.

Ob eine Beschichtung im Außenbereich schnell oder langsam anschmutzt, hängt von einer Vielzahl von Faktoren ab, einerseits von Luftverschmutzung, Klima usf. andererseits von der Rauhigkeit der Beschichtungen und der Wechselwirkung zwischen Schmutzpartikeln und Beschichtungsoberfläche. Ein wichtiger Parameter ist dabei die Härte des Bindemittelpolymeren. Bindemittel, die zu weichen oder gar klebrigen Filmen auftrocknen, verschmutzen schneller als solche mit harter Oberfläche. Das Problem der Verschmutzung stellt sich daher besonders bei Anstrichmitteln, die weiche Bindemittelpolymere enthalten, das sind z. B. lösemittelfreie Anstrichmittel, deren Bindemittel bei Verarbeitungstemperaturen bis wenig über 0°C noch zu einem Film verschmelzen, und Anstrichmittel für elastische Beschichtungen. Elastische Beschichtungen sind gekennzeichnet durch ein hohes Maß an Elastizität. Diese wird gebraucht, damit die elastischen Beschichtungen auch bei niedrigen Temperaturen (-10°C) ausreichend rissüberbrückungsfähig sind. Normalerweise wird die Glasübergangstemperatur des Polymers über die Monomerzusammensetzung auf Temperaturen unter -10°C eingestellt. Polymere mit niedriger Glasübergangstemperatur haben eine verstärkte Neigung zur Anschmutzung. Dies kann man verhindern durch Vernetzungssysteme, die das Polymer elastischer und gegebenenfalls härter machen (Glasübergangstemperatur wird erhöht). Stand der Technik ist zum Beispiel eine Metallsalzvernetzung oder UV-Vernetzung. Die nachträgliche Zugabe von Calcium-Ionen führt zu einer Vernetzung, wie beschrieben von B.G. Bufkin und J.R. Grawe in J. Coatings Tech., 1978 50(644), 83. Ein Nachteil könnte eine erhöhte Wasserempfindlichkeit sein. UV-Vernetzung und/oder Vernetzung mit Tageslicht wird erreicht durch Zugabe von Benzophenon und/oder seinen Derivaten, wie beschrieben in US 3,320,198, EP 100 00, EP 522 789, EP 1 147 139. EP 1 845 142 beschreibt die Zugabe von einem Photoinitiator zu AAEM-enthaltenden Dispersionen.

Andere Möglichkeiten um eine hohe Elastizität und eine gute Wasserdampfdurchlässigkeit zu erhalten ist die Verwendung von Silikonen, wie z.B. beschrieben in US 5,066,520. Die Verwendung von Fluoroacrylaten führt zu sehr hydrophoben Beschichtungen, die ebenfalls Schmutz abweisen können (EP 890 621).

Aufgabe der vorliegenden Erfindung war die Entwicklung eines Anstrichmittels enthaltend eine wässrige Dispersion, das sich insbesondere für elastische Beschichtungsmittel eignet und in der Beschichtung eine ausreichende Elastizität und Wasserfestigkeit mit gleichzeitig hoher Anschmutzresistenz und Wasserdampfdurchlässigkeit gewährleistet.

Überraschenderweise zeichnen sich Anstrichmittel enthaltend wässrige Emulsionspolymerisate enthaltend

(A) Monomere A
(B) mindestens ein (Meth)acrylat mit olefinisch ungesättigten Seitengruppen (Monomere B) sowie
(C) wenigstens einen Photoinitiator (Komponente C), sowie anorganische Füllstoffe

durch eine hohe Anschmutzresistenz aus, ohne die Filmdehnung insgesamt wesentlich zu beeinflussen.

Werden keine anderen Angaben gemacht, so gelten im Rahmen der vorliegenden Erfindung folgende allgemeine Definitionen:

$C_1$-$C_4$-Alkyl steht für einen linearen oder verzweigten Alkylrest mit 1 bis 4 Kohlenstoffatomen. Dies sind Methyl, Ethyl, n-Propyl, Isopropyl, n-Butyl, sec-Butyl, Isobutyl und tert-Butyl.

$C_1$-$C_{18}$-Alkyl steht für einen linearen oder verzweigten Alkylrest mit 1 bis 12 Kohlenstoffatomen. Beispiele hierfür sind Methyl, Ethyl, n-Propyl, Isopropyl, n-Butyl, sec-Butyl, Isobutyl, tert-Butyl, Pentyl, Neopentyl, Hexyl, Heptyl, Octyl, 2-Ethylhexyl, Nonyl, Decyl, 2-Propylheptyl, 4-Methyl-2-propylhexyl, Undecyl, Dodecyl und deren Konstitutionsisomere.

$C_1$-$C_{18}$-Alkylaryl- steht für $C_1$-$C_{18}$-Alkyl, das wie oben definiert ist, wobei ein Wasserstoffatom durch eine Arylgruppe ersetzt ist. Beispiele sind Benzyl, Phenethyl und dergleichen.

Unter einer primären Aminogruppe versteht man einen Rest $-NH_2$.

Die nachfolgend gemachten Ausführungen zu bevorzugten Ausgestaltungen des erfindungsgemäßen Verfahrens, insbesondere zu den erfindungsgemäß eingesetzten Monomeren und weiteren Reaktionskomponenten und zu den mit dem Verfahren erhältlichen Polymeren sowie zu deren Verwendung gelten sowohl allein für sich genommen als auch insbesondere in jeder denkbaren Kombination miteinander.

Wässrige Emulsionspolymerisate sind dem Fachmann geläufig und werden beispielsweise in Form einer wässrigen Polymerisatdispersion durch radikalisch initiierte wässrige Emulsionspolymerisation von ethylenisch ungesättigten Monomeren hergestellt. Diese Methode ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Die radikalisch initiierte wässrige Emulsionspolymerisation erfolgt üblicherweise dergestalt, dass man die ethylenisch ungesättigten Monomeren, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schaum- oder viskositätsmodifizierende Additive zugesetzt.

Neben diesen sogenannten primären wässrigen Polymerisatdispersionen kennt der Fachmann auch noch sogenannte sekundäre wässrige Polymerisatdispersionen. Unter diesen werden solche wässrigen Polymerisatdispersionen verstanden, bei deren Herstellung das Polymerisat außerhalb des wässrigen Dispergiermediums erzeugt wird, beispielsweise in Lösung eines geeigneten nichtwässrigen Lösungsmittels befindlich. Diese Lösung wird anschließend in das wässrige Dispergiermedium überführt und unter Dispergierung das Lösungsmittel, in der Regel destillativ, abgetrennt.

Bevorzugt werden aber primäre wässrige Dispersionen verwendet.

Erfindungsgemäß werden im Rahmen des vorliegenden Verfahrens Dispergiermittel mit verwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergiermittel bevorzugt jedoch ausschließlich Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF SE.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

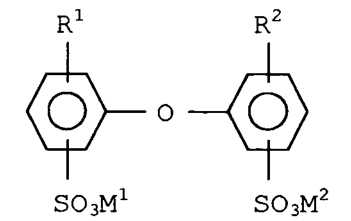
(I),

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z.B. aus US-A 4,269,749, und im Handel erhältlich.

Geeignete kationenaktive Emulgatoren sind in der Regel einen $C_6$- bis $C_{18}$-Alkyl-, -Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF SE, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge $\geq$ 0,1 und $\leq$ 10 Gew.-%, vorzugsweise $\geq$ 0,1 und $\leq$ 5 Gew.-%, insbesondere $\geq$ 0,5 und $\leq$ 4 Gew.-%, jeweils bezogen auf die Gesamtmonomerenmenge, eingesetzt.

Die Gesamtmenge der als Dispergiermittel zusätzlich oder statt der Emulgatoren eingesetzten Schutzkolloide beträgt oft $\geq$ 0,1 und $\leq$ 10 Gew.-% und häufig $\geq$ 0,2 und $\leq$ 7 Gew.-%, jeweils bezogen auf die Gesamtmonomerenmenge.

Bevorzugt werden jedoch anionische und/oder nichtionische Emulgatoren als Dispergiermittel eingesetzt.

Soll die Teilchengröße der mittels der radikalisch initiierten wässrigen Emulsionspolymerisation herzustellenden Polymerisatteilchen gezielt eingestellt werden, so wird in der Regel eine so genannte Polymersaat eingesetzt, welche

entweder vorher mit anderen Monomeren separat hergestellt wurde (Polymerfremdsaat) oder welche durch Teilpolymerisation der zu polymerisierenden Monomere "in situ" erzeugt wurden.

Die Herstellung einer wässrigen Polymerisatdispersion unter Verwendung einer in situ-Polymersaat ist dem Fachmann geläufig (siehe beispielsweise DE-A 19609509, EP-A 690882, EP-A 710680, EP-A 1125949, EP-A 1294816, EP-A 1614732, WO-A 03/29300) und erfolgt in der Regel dergestalt, dass vorab der eigentlichen Emulsionspolymerisation eine kleine Teilmenge des zur Emulsionspolymerisation eingesetzten Monomerengemisches im wässrigen Polymerisationsmedium vorgelegt und in Anwesenheit einer großen Emulgatormenge radikalisch polymerisiert wird.

Die Teilchengröße der erfindungsgemäßen Emulsionspolymerisate wird vorzugsweise mit Hilfe einer Polymerfremdsaat eingestellt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Die Gesamtmenge des Radikalinitiators kann vor Initiierung der Polymerisationsreaktion im wässrigen Polymerisationsmedium vorgelegt werden. Es ist aber auch möglich, gegebenenfalls lediglich eine Teilmenge des Radikalinitiators im wässrigen Polymerisationsmedium vor Initiierung der Polymerisationsreaktion vorzulegen und dann unter Polymerisationsbedingungen während der erfindungsgemäßen radikalischen Emulsionspolymerisation die Gesamtmenge bzw. die gegebenenfalls verbliebene Restmenge nach Maßgabe des Verbrauchs diskontinuierlich in einer oder mehreren Portionen oder kontinuierlich mit gleich bleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium im Polymerisationsgefäß unter Polymerisationsbedingungen erfolgen. Es ist aber auch möglich, dass eine Teil- oder die Gesamtmenge des Radikalinitiators dem die gegebenenfalls vorgelegten Monomeren A und B enthaltenden wässrigen Polymerisationsmedium im Polymerisationsgefäß in unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsionspolymerisation bei 1 atm unter Sauerstoffausschluß, beispielsweise unter Inertgasatmosphäre, wie beispielsweise unter Stickstoff oder Argon durchgeführt.

Das wässrige Reaktionsmedium kann prinzipiell auch in untergeordneten Mengen ($\leq$ 5 Gew.-%) wasserlösliche

organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmonomerenmenge, ist in der Regel $\leq$ 5 Gew.-%, oft $\leq$ 3 Gew.-% und häufig $\leq$ 1 Gew.-%.

Häufig ist es günstig, wenn eine Teil- oder die Gesamtmenge der optional eingesetzten radikalkettenübertragenden Verbindung dem wässrigen Polymerisationsmedium vor der Initiierung der radikalischen Emulsionspolymerisation zugeführt wird. Insbesondere günstig ist es jedoch, wenn eine Teil- oder die Gesamtmenge der optional eingesetzten radikalkettenübertragenden Verbindung dem wässrigen Polymerisationsmedium gemeinsam mit den Monomeren A bis B unter Polymersiationsbedingungen zugeführt wird.

Die Dosierung der gegebenenfalls verbliebenen Restmenge der Monomeren A bis B kann diskontinuierlich in einer oder mehreren Portionen oder kontinuierlich mit gleich bleibenden oder sich ändernden Mengenströmen erfolgen. Bevorzugt erfolgt die Dosierung der Monomeren A bis B kontinuierlich mit gleich bleibenden Mengenströmen.

Auch können die Restmengen der Monomeren A bis B in separaten Einzelströmen oder als Monomerengemisch dosiert werden. Bevorzugt erfolgt die Dosierung der gegebenenfalls verbliebenen Restmenge der Monomeren A bis B als Monomerengemisch, insbesondere vorteilhaft in Form einer wässrigen Monomerenemulsion. Wesentlich ist, dass erfindungsgemäß auch Verfahrensvarianten umfasst sein sollen, bei denen sich die Zusammensetzungen der jeweiligen Monomeren A und/oder B ändern, beispielsweise in einer dem Fachmann geläufigen Gradienten- oder Stufenfahrweise.

Mit besonderem Vorteil erfolgt das erfindungsgemäße Verfahren dergestalt, dass die Monomeren A bis B bis zu einem Umsatz von $\geq$ 95 Gew.-%, vorteilhaft $\geq$ 98 Gew.-% und insbesondere vorteilhaft $\geq$ 99 Gew.-% umgesetzt werden. Häufig ist es vorteilhaft, wenn die nach Abschluss der Polymerisationsstufe 2 erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Durch gezielte Variation von Art und Menge der Monomeren A und B ist es dem Fachmann erfindungsgemäß möglich, wässrige Polymerisatdispersionen herzustellen, deren Polymerisate eine Glasübergangstemperatur bzw. einen Schmelzpunkt im Bereich von -60 bis 270 °C aufweisen. Selbstverständlich können auch Stufen- oder Mehrphasenpolymerisate mit mehreren Glasübergangstemperaturen hergestellt werden.

Erfindungsgemäß solche in wässriger Dispersion vorliegende Emulsionspolymerisate eingesetzt, welche als Monomere A wenigstens ein α,β-ethylenisch ungesättigtes Monomer enthalten, das vorzugsweise ausgewählt ist aus Estern α,β-ethylenisch ungesättigter Mono- und Dicarbonsäuren mit $C_1$-$C_{20}$-Alkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit $C_2$-$C_{30}$-Alkandiolen, Amiden α,β-ethylenisch ungesättigter Mono- und Dicarbonsäuren mit $C_2$-$C_{30}$-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit $C_1$-$C_{30}$-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, $C_2$-$C_8$-Monoolefinen, nicht aromatischen Kohlenwasserstoffen mit mindestens zwei konjugierten Doppelbindungen, Polyether(meth)acrylaten, Harnstoffgruppen aufweisenden Monomeren und/oder Mischungen davon.

Geeignete Ester α,β-ethylenisch ungesättigter Mono- und Dicarbonsäuren mit $C_1$-$C_{20}$-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, Propylheptyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Stearyl(meth)acrylat, Lauryl(meth)acrylat und Mischungen davon.

Bevorzugt als Vinylaromaten sind Styrol, 2-Methylstyrol, 4-Methylstyrol, 2-(n-Butyl)styrol, 4-(n-Butyl)styrol, 4-(n-Decyl)styrol und besonders bevorzugt Styrol.

Geeignete Ester von Vinylalkohol mit $C_1$-$C_{30}$-Monocarbonsäuren sind z. B. Vinylformiat, Vinylacetat, Vinylpropionat, Vinylbutyrat, Vinyllaurat, Vinylstearat, Vinylpropionat, Versaticsäurevinylester und Mischungen davon.

Geeignete ethylenisch ungesättigte Nitrile sind Acrylnitril, Methacrylnitril und Mischungen davon.

Geeignete Vinylhalogenide und Vinylidenhalogenide sind Vinylchlorid, Vinylidenchlorid, Vinylfluorid, Vinylidenfluorid und Mischungen davon.

Geeignete ethylenisch ungesättigte Carbonsäuren, Sulfonsäuren und Phosphonsäuren oder deren Derivate sind Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat. Besonders bevorzugt sind Acrylsäure, Methacrylsäure und Mischungen davon.

Beispiele für phosphorhaltige Monomere sind z. B. Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie $H_2C=C(CH_3)COO(CH_2CH_2O)_nP(OH)_2$ und $H_2C=C(CH_3)COO(CH_2CH_2O)_nP(=O)(OH)_2$, worin n für 1 bis 50 steht. Weiter geeignet sind Phosphoalkylcrotonate, Phosphoalkylmaleate, Phosphoalkylfumarate, Phosphodial-kyl(meth)acrylate, Phosphodialkylcrotonate und Allylphosphate. Weitere geeignete Phosphorgruppen-haltige Monomere sind in WO 99/25780 und US 4,733,005 beschrieben, worauf hier Bezug genommen wird.

Geeignete Ester α,β-ethylenisch ungesättigter Mono- und Dicarbonsäuren mit $C_2$-$C_{30}$-Alkandiolen sind z. B. 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat etc.

Geeignete primäre Amide α,β-ethylenisch ungesättigter Monocarbonsäuren und deren N-Alkyl- und N,N-Dialkylderivate sind Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Stearyl(meth)acrylamid, N-Lauryl(meth)acrylamid, N,N-Dimethyl(meth)acrylamid, N,N-Diethyl(meth)acrylamid, Morpholinyl(meth)acrylamid.

Geeignete N-Vinyllactame und deren Derivate sind z. B. N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc.

Geeignete offenkettige N-Vinylamidverbindungen sind beispielsweise N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid.

Geeignete Ester von $\alpha,\beta$-ethylenisch ungesättigten Mono- und Dicarbonsäuren mit Aminoalkoholen sind N,N-Dimethylaminomethyl(meth)acrylat, N,N-Dimethylaminoethyl(meth)acrylat, N,N-Diethylaminoethylacrylat, N,N-Dimethylaminopropyl(meth)acrylat, N,N-Diethylaminopropyl(meth)acrylat und N,N-Dimethylaminocyclohexyl(meth)acrylat.

Geeignete Amide $\alpha,\beta$-ethylenisch ungesättigter Mono- und Dicarbonsäuren mit Diaminen, welche mindestens eine primäre oder sekundäre Aminogruppe aufweisen sind N-[2-(Dimethylamino)ethyl]acrylamid, N-[2-(Dimethylamino)ethyl]methacrylamid, N-[3-(Dimethylamino)propyl]acrytamid, N-[3-(Dimethylamino)propyl]methacrylamid, N-[4-(Dimethylamino)butyl]acrylamid, N-[4-(Dimethylamino)-butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid etc.

Geeignete Monomere A sind weiterhin N,N-Diallylamine und N,N-Diallyl-N-alkylamine und deren Säureadditionssalze und Quaternisierungsprodukte. Alkyl steht dabei vorzugsweise für $C_1$-$C_{24}$-Alkyl. Bevorzugt sind N,N-Diallyl-N-methylamin und N,N-Diallyl-N,N-dimethylammonium-Verbindungen, wie z. B. die Chloride und Bromide.

Geeignete Monomere A sind weiterhin vinyl- und allylsubstituierte Stickstoffheterocyclen, wie N-Vinylimidazol, N-Vinyl-2-methylimidazol, vinyl- und allylsubstituierte heteroaromatische Verbindungen, wie 2- und 4-Vinylpyridin, 2- und 4-Allylpyridin, und die Salze davon.

Geeignete $C_2$-$C_8$-Monoolefine und nicht aromatische Kohlenwasserstoffe mit mindestens zwei konjugierten Doppelbindungen sind z. B. Ethylen, Propylen, Isobutylen, Isopren, Butadien, etc.

Geeignete Harnstoffgruppen aufweisende Monomere A sind z. B. N-Vinyl- oder N-Allylharnstoff oder Derivate des Imidazolidin-2-ons. Dazu zählen N-Vinyl- und N-Allylimidazolidin-2-on, N-Vinyloxyethylimidazolidin-2-on, N-(2-(Meth)acrylamidoethyl)imidazolidin-2-on.

Bevorzugte Harnstoffgruppen aufweisende Monomere sind N-(2-Acryloxyethyl)imidazolidin-2-on und N-(2-Methacryloxyethyl)imidazolidin-2-on. Besonders bevorzugt ist N-(2-Methacryloxyethyl)imidazolidin-2-on (2-Ureidomethacrylat, UMA).

Sowie vernetzende Monomere, beispielsweise Keto- oder Aldehydgruppen tragende Monomere wie etwa (Meth-)Acrolein, Diacetonacrylamid (DAAM), Acetoacetoxyethylmethacrylat (AAEM), die mit Adipinsäuredihydrazid (ADDH) oder Diaminen kombiniert werden können, ferner Epoxidgruppen tragende Monomere wie etwa Glycidylmethacrylat (GMA) oder diolefinisch ungesättigte Verbindungen wie etwa Allyl(meth)acrylat (AMA), Butandioldiacrylat, Hexandioldiacrylat.

Die zuvor genannten Monomere A können einzeln, in Form von Mischungen innerhalb einer Monomerklasse oder in Form von Mischungen aus verschiedenen Monomerklassen eingesetzt werden.

Erfindungsgemäß werden bevorzugt solche Emulsionspolymerisate eingesetzt, die neben den Monomeren A, die Monomere B in Mengen von 0,1 bis 30 Gew.-% und die Komponente C, den wenigstens einen Photoinitiator in Mengen von 0,01 bis 5 Gew.-% enthalten, jeweils bezogen auf die Summe der Monomere enthalten.

Erfindungsgemäß werden bevorzugt solche in wässriger Dispersion vorliegende Emulsionspolymerisate eingesetzt, deren Glasübergangstemperatur $\leq$ 100 °C, insbesondere $\leq$ 60 °C, bevorzugt > -50 °C und $\leq$ 30 °C, besonders $\leq$ 10 °C und vorteilhaft $\geq$ -40°C und $\leq$ 0 °C beträgt. Mit der Glasübergangstemperatur (Tg), ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Im Falle einer Stufen- oder Gradientenpolymerisation können die Emulsionspolymerisate natürlich auch mehrere Glasübergangstemperaturen haben.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Der mittlere Durchmesser der in wässriger Dispersion vorliegenden Emulsionspolymerisate (Polymerisatteilchen) liegt in der Regel im Bereich von 10 bis 1000 nm, oft 50 bis 500 nm oder 80 bis 300 nm. Die Teilchengrößenverteilung kann mono- oder multimodal sein. Im Falle einer bimodalen Teilchengrößenverteilung hat die feinteilige Komponente Teilchendurchmesser von vorzugsweise 50 bis 150 nm, die grobteilige von vorzugsweise 200 bis 500 nm. Des Weiteren betragen die Feststoffgehalte der erfindungsgemäß einsetzbaren wässrigen Dispersionen von Emulsionspolymerisaten in der Regel ≥ 10 und ≤ 70 Gew.-%, vorteilhaft ≥ 30 und ≤ 70 Gew.-% und insbesondere vorteilhaft ≥ 40 und ≤ 65 Gew.-%.

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Teilchengröße der Polymerisatteilchen wurde durch dynamische Lichtstreuung an einer 0,01 Gew.-%igen Dispersion bei 23°C mittels eines High Performance Particle Sizer (HPPS) der Fa. Malvern Instruments, England, ermittelt. Angegeben wurde der Kumulantenauswertung (cumulant z-average) der gemessenen Autokorrelationsfunktion.

Die eingesetzten Monomere B sind dem Fachmann an sich bekannt und beispielsweise in den Druckschriften WO 2009/047234 und WO 2009/146995 beschrieben, auf deren Offenbarung vollumfänglich Bezug genommen wird.

Gemäß einer besonderen Ausgestaltung der vorliegenden Erfindung können die Monomere B eine Iodzahl im Bereich von 50 bis 300 g Iod/ 100g, besonders bevorzugt im Bereich von 50 bis 200 g Iod/ 100g, insbesonders bevorzugt 50 bis180 g Jod/100g aufweisen, ganz besonders bevorzugt 80 bis 150 g Jod/100g Monomer.

Die Jodzahl wurde bestimmt nach Kaufmann, DGF-Einheitsmethoden C-V 11 b (2002).

Die Schreibweise (Meth)acryl steht für Acryl- und Methacrylreste, wobei Methacrylreste bevorzugt sind. Besonders bevorzugte Monomere B sind Methacryloyloxy-2-ethyl-ölsäureamid, Methacryloyloxy-2-ethyl-linolsäureamid und/oder Methacryloyloxy-2-ethyl-linolensäureamid, sowie Methacryloyloxy-2-hydroxypropyl-linolsäureester und Methacryloyloxy-2-hydroxypropylölsäureester.

Die Umsetzung der Methacrylate der Monomere B erfolgt bevorzugt mit geeigneten Fettsäuren.

Zu den bevorzugten erfindungsgemäßen (Meth)acrylaten, gehören insbesondere Octadecan-dien-yl-(meth)acrylat, Octadecan-trien-yl-(meth)acrylat, Hexadecenyl(meth)acrylat, Octadece-nyl(meth)acrylat und Hexadecan-dien-yl-(meth)acrylat.

Darüber hinaus können (Meth)acrylate, die im Alkylrest mindestens eine Doppelbindung und 8 bis 40 Kohlenstoffatome aufweisen, auch durch Umsetzung von ungesättigten Fettsäuren mit (Meth)acrylaten, die im Alkoholrest reaktive Gruppen aufweisen, erhalten werden. Zu den reaktiven Gruppen gehören insbesondere Hydroxygruppen sowie Epoxygruppen. Dementsprechend können beispielsweise auch Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1 ,6- hexandiol(meth)acrylat, 1 ,10-Decandiol(meth)acrylat; oder Epoxygruppen enthaltende (Meth)acrylate, beispielsweise Glycidyl(meth)acrylat als Edukte zur Herstellung der zuvor genannten (Meth)acrylate eingesetzt werden.

Geeignete Fettsäuren zur Umsetzung mit den zuvor genannten (Meth)acrylaten sind vielfach kommerziell erhältlich und werden aus natürlichen Quellen erhalten. Zu diesen gehören unter anderem Undecylensäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure und/oder Cervonsäure.

Zu den ganz besonders bevorzugten (Meth)acrylaten, gehören insbesondere (Meth)acryloyloxy-2-hydroxypropyl-linolsäureester, (Meth)acryloyloxy-2-hydroxypropyl-linolensäureester und (Meth)acryloyloxy-2-hydroxypropyl-ölsäureester.

Die Umsetzung der ungesättigten Fettsäuren mit (Meth)acrylaten, die reaktive Gruppen im Al-koholrest aufweisen, ist an sich bekannt und beispielsweise in DE-A-41 05 134, DE-A-25 13 516, DE-A-26 38 544 und US 5,750,751 dargelegt.

Die zuvor dargelegten (Meth)acrylate mit mindestens einer Doppelbindung können einzeln oder als Mischung von zwei oder mehr (Meth)acrylaten eingesetzt werden.

Vorteile lassen sich insbesondere mit (Meth)acrylat-Segmenten erzielen, die mindestens 5, vorzugsweise mindestens 10 Gew.-% und besonders bevorzugt mindestens 15 Gew.-% an Einheiten umfassen, die von (Meth)acryloyloxy-2-hydroxypropyl-ölsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen. Bevorzugt weist das Polymerisat 15 Gew.-% bis 45 Gew.-%, besonders bevorzugt 20 bis 35 Gew.-% an Einheiten auf, die von (Meth)acryloyloxy-2-hydroxypropyl-ölsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

Gemäß einem weiteren Aspekt der vorliegenden Erfindung sind (Meth)acrylat-Segmenten bevorzugt, die mindestens 20 Gew.-%, bevorzugt mindestens 40 Gew.-% und ganz besonders bevorzugt mindestens 50 Gew.-% an Einheiten umfassen, die von (Meth)acryloyloxy-2-hydroxypropyl-linolsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen. Bevorzugt weist das (Meth)acrylat-Segment 45 Gew.-% bis 80 Gew.-%, besonders bevorzugt 55 bis 70 Gew.-% an Einheiten auf, die von (Meth)acryloyloxy-2-hydroxypropyl-linolsäureester abgeleitet sind, bezogen auf das Gewicht der Einheiten, die von (Meth)acrylaten abgeleitet sind, die im Alkylrest mindestens eine Doppelbindung und 8 bis 40 Kohlenstoffatome aufweisen.

Die Monomere B werden in Mengen von 0,1 bis 30 Gew.-%, vorzugsweise 0,1 bis 10 Gew.-%, besonders bevorzugt in Mengen von 0,5 bis 8 Gew.-%, jeweils bezogen auf das Gesamtgewicht der Monomeren eingesetzt.

Die Komponente C, der wenigstens eine Photoinitiator, kann sowohl einpolymerisert werden als auch nach der eigentlichen Emulsionspolymerisation zugegeben werden. Wird er nach der eigentlichen Emulsionspolymerisation zugegeben, wird anschließend solange gerührt, bis der wenigstens eine Photoinitiator homogen verteilt ist. Im Falle eines Feststoffs ist es oft vorteilhaft, den wenigstens einen Photoinitiator in der Wärme, d.h. bei Temperaturen oberhalb des Schmelzpunkts zuzugeben. Es gibt auch beispielsweise Benzophenonderivate in flüssiger Form. Diese können einfach zu der Polymerisatdispersion zugegeben und eingerührt werden. Ein Beispiel eines solches Derivats ist Esacure® TZM der Fa. Lehmann & Voss & Co., Deutschland. Für den Fall, dass der wenigstens eine Photoinitiator über copolymerisationsfähige Doppelbindungen verfügt, kann er auch während der Polymerisation zudosiert werden. Dies kann in einem separaten Zulauf oder gemeinsam mit den Monomeren A und/oder B erfolgen. Vorzugsweise wird der copolymerisierbare Photoinitiator mit den Monomeren A und B zugegeben.

Unter der Komponenten C, dem wenigstens einen Photoinitiator versteht man beispielsweise Benzophenon oder Acetophenon oder Derivate mit Benzophenon- oder Acetophenonteilstrukturen, etwa substituierte Benzophenone, wie 4-Methylbenzophenon, 2,4,6-Trimethylbenzophenon, Thioxanthone, etwa Isopropylthioxanthon, oder olefinisch ungesättigte Benzophenon- oder Acetophenonabkömmlinge, beispielsweise mit (Meth-)Acrylrest wie (Meth)acryloxyethoxybenzophenon oder mit Vinylgruppe wie 4-Vinyloxybenzophenon oder Gemische dieser Wirkstoffe, wie z.B. 4-Methylbenzophenon und 2,4,6-Trimethylbenzophenon Weitere Photoinitiatoren, die in Betracht kommen sind in der EP 417 568, Seite 3, Zeile 39 bis Seite 7, Zeile 51 beschrieben und auf diese Offenbarung wird explizit Bezug genommen.

Die in den erfindungsgemäßen Anstrichmitteln enthaltenen Emulsionspolymerisate verfügen über (mehrfach) olefinisch ungesättigte Seitenketten, und sind daher ähnlich wie beispielsweise Alkydharze mit Hilfe sogenannter Trockenstoffe (Sickative) oxidativ vernetzbar. Bei Trockenstoffen handelt es sich um Metallverbindungen mit zumeist Co- oder Mn-, gelegentlich auch Fe-Verbindungen als aktiver Komponente, die die Reaktion der (mehrfach) olefinisch ungesättigten Alkylketten mit Luftsauerstoff katalysieren (vgl. U. Poth, Polyester und Alkydharze, S. 183 f). Überraschenderweise wirkte sich der Zusatz von Trockenstoffen zu den erfindungsgemäßen Polymerdispersionen nicht auf die Verschmutzung daraus hergestellter Anstrichfilme aus. Vorzugsweise werden in den Polymerdispersionen bzw. in den darauf basierenden Anstrichmitteln daher keine Trockenstoffe eingesetzt.

Gegenstand der vorliegenden Erfindung ist auch die Verwendung der Anstrichmittel, vorzugsweise in Fassadenfarben enthaltend die wässrigen Polymerdispersionen als Bindemittel.

Das schließt auch Anstrichmittel ein, die zu elastischen Beschichtungen auftrocknen.

Derartige elastische Beschichtungsmittel sollen feine Risse an der Fassade überbrücken und auf diese Weise Gebäude zuverlässig gegen Feuchtigkeit und andere Witterungseinflüsse schützen.

Die Herstellung der erfindungsgemäßen Anstrichmittel erfolgt in bekannter Weise durch Abmischen der Komponenten in hierfür üblichen Mischvorrichtungen. Es hat sich bewährt, zunächst aus den Pigmenten, Füllstoffen, Wasser und gegebenenfalls Hilfsmitteln eine wässrige Paste oder Dispersion zu bereiten, und anschließend erst die wässrige Polymerdispersion gegebenenfalls unter Rühren zuzugeben.

Erfindungsgemäße Anstrichmittel enthalten (im Nasszustand)

i. 10 bis 98 Gew.-%, vorzugsweise 20 bis 80 Gew.-%, besonders bevorzugt 30 bis 50 Gew.-%, der erfindungsgemäßen Polymerdispersion,

ii. 5 bis 30 Gew.-%, eines oder mehrerer anorganischer Füllstoffe,

iii. 0 bis 5 Gew.-%, vorzugsweise 0,01 bis 3 Gew.-%, besonders bevorzugt 0,05 bis 2,5 Gew.-%, eines oder mehrerer Verdicker,

iv. 0 bis 30 Gew.-%, vorzugsweise 1 bis 25 Gew.-% eines oder mehrerer Pigmente und

v. 0 bis 20 Gew.-%, vorzugsweise 0 bis 10 Gew.-%, besonders bevorzugt 0 bis 5 Gew.-% je weitere Hilfsstoffe, wie zum Beispiel Biozide, Dispergiermittel, Filmbildehilfsmittel und Entschäumer,
vi. Wasser,

wobei die Summe der Komponenten i. bis vi. 100 Gew.-% beträgt.

Als feinteilige anorganische Füllstoffe (ii) werden im wesentlichen anorganische Materialien mit im Vergleich zu den Pigmenten geringeren Brechungsindices verwendet. Die feinteiligen Füllstoffe sind dabei häufig natürlich vorkommende Mineralien, wie beispielsweise Calcit, Kreide, Dolomit, Kaolin, Talk, Talk/Chlorit-Verwachsungen, Glimmer, Diatomeenerde, Baryt, Quarz, aber auch synthetisch hergestellte anorganische Verbindungen, wie beispielsweise präzipitiertes Kalziumcarbonat, kalziniertes Kaolin oder Bariumsulfat sowie pyrogene Kieselsäure. Bevorzugt wird als Füllstoff Kalziumcarbonat in Form des kristallinen Calcits oder der amorphen Kreide eingesetzt

Bevorzugte anorganische Füllstoffe sind die Omyacarb®-Marken von der Fa. Omya und die Finntalc®-Marken von der Fa. Mondo Minerals, die Celite®- und Optimat™-Marken von der Fa. World Minerals, die Aerosil®-Marken von Evonik Industries AG.

Als Pigmente (iv) werden feinteilige anorganische und organische Stoffe eingesetzt. Als wichtigstes Weißpigment ist aufgrund seines hohen Brechungsindex und seines guten Deckvermögens Titandioxid in Form seiner Anatas- und Rutil-Modifikationen zu nennen. Typische Handelsprodukte sind beispielsweise die Kronos®-Marken von der Fa. Kronos, die Tiona®-Marken von der Fa. Millenium, die TIOXIDE®-Marken von der Fa. Huntsman, Ti-Pure®-Marken von der Fa. Du-Pont de Nemours. Aber auch Zinkoxid, Zinksulfidwerden als Weißpigmente eingesetzt. Daneben werden aber auch organische Weißpigmente, wie beispielsweise nichtverfilmende styrol- (und carboxylgruppen)reiche hohle Polymerisatteilchen mit einer Teilchengröße von ca. 300 bis 400 nm (sogenannte Opakteilchen) verwendet, beispielsweise Rhopaque-Marken der Fa. Dow.

Neben Weißpigmenten werden zur Farbgestaltung der Beschichtung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau, Rußsowie die etwas teureren organischen Pigmente, beispielsweise Phthalocyanine, Azopigmente, Chinacridone, Perylene, Carbozole, eingesetzt.

Bei den Verdickungsmitteln iii. handelt es sich in der Regel um hochmolekulare Stoffe, die Wasser aufsaugen und dabei zu voluminösen Strukturen aufquellen oder um amphiphile Moleküle die über mindestens zwei hydrophobe Gruppen verfügen und in Wasser über Mizellen lockere Gitterstrukturen ausbilden.

Beispiele sind hochmolekulare Polymere auf Basis von Acrylsäure und Acrylamid (beispielsweise Collacral® HP der BASF SE), carboxylgruppenreiche Acrylsäureester Copolymere wie Latekoll® D (BASF SE), letztere können auch zusätzlich über hydrophobe Gruppen verfügen (sog. HASE-Verdicker), ferner PU-Assoziativverdicker (beispielsweise Collacral® PU 75 der BASF SE), Cellulosen und deren Derivate, z.B. Celluloseether (Natrosol-Typen von Ashland-Aqualon) oder Carboxymethylcellulose, sowie natürliche Verdicker, wie beispielsweise Bentonite, Alginate oder Stärke.

Die Verdicker (iii.) werden in Mengen von 0 bis 5 Gew.-%, bevorzugt 0,1 bis 2,5 Gew.-% eingesetzt.

Zu den weiteren Hilfsstoffen (v.) gehören beispielsweise Konservierungsmittel zur Vermeidung von Pilz- und Bakterienbefall, Lösungsmittel zur Beeinflussung der offenen Zeit wie Ethylen- oder Propylenglykol und der Filmbildung, beispielsweise Butylglykol, Butyldiglykol, Propylenglykolether wie etwa Dowanol PP, DPM oder DPnB (Fa. Dow), Texanol (Fa. Eastman), hochsiedende Ester, beispielsweise Diisobutylester der Glutar-, Bernstein- und Adipinsäuresäure, Dispergiermittel zur Stabilisierung der feindispergierten Pigment- und Füllstoffteilchen, beispielsweise Polycarboxylate wie etwa Pigmentverteiler A oder NL (BASF SE) oder Oligo- bzw. Polyphosphate wie Calgon N, Emulgatoren (Emulphor® OPS 25, Lutensol® TO 89), Frostschutzmittel (Ethylenglykol, Propylenglykol) oder Entschäumer (Lumiten® Marken). Bestimmung des pH-Wertes wurde nach DIN 53785 ausgeführt. Das Gerät war ein pH-Wert-Meßgerät von der Fa. Methrom, ein Titroprocessor 682. Etwa 50 ml der Probe werden in ein 100-ml-Becherglas gegeben. Die Probe wird anschließend im

Thermostaten auf 23 $\pm$ 1°C temperiert. Die Glaselektrode wird am besten in einer 3-molaren KCl-Lösung aufbewahrt. Vor der Messung wird sie mehrmals mit der Polymerdispersion abgespült und danach in die Probe eingetaucht. Bleibt die Zeigerstellung der Anzeige des Meßgeräts konstant, wird der pH-Wert abgelesen.

Es werden drei Bestimmungen mit jeweils neuen Proben der zu messenden Dispersion durchgeführt.

Der Xenotest wurde wie folgt durchgeführt:

Die Prüfkörper wurden entsprechend DIN EN ISO 11341: Dezember 2004 in einem Xenotest 1200 Bewitterungsgerät der Fa. Heraeus insgesamt 48 h bewittert (3 Xenonstrahler mit je 4500 W, Bestrahlungsstärke bei 300-400 nm (3 mal Suprax Spezialglasfilter) ca. 60 W/m$^2$, Prüfkammertemperatur in der Trockenperiode 38 +/- 3 °C, rel. Feuchte 65 +/- 5 % , Schwarzstandardtemperatur in der Trockenperiode 65 +/-3°C, Gleichlauf, Strahlenquelle ständig in Betrieb, Trockenperiode 102 min, Beregnung 18 min, beginnend mit Trockenperiode).

Beispiel 1 (B 1)

In einem mit Dosiereinrichtungen und Temperaturregelung ausgerüsteten Polymerisationsgefäß wurden bei 20 bis 25 °C (Raumtemperatur) unter Stickstoffatmosphäre

| | |
|---|---|
| 307,9 g | entionisiertes Wasser und |
| 41,9 g | einer 33 Gew.-%igen wässrigen Lösung einer Polystyrol-Saatdispersion |

vorgelegt und unter Rühren auf 85°C aufgeheizt. Bei Erreichung dieser Temperatur wurden 39,6 g einer 1,8 Gew.-%igen wässrigen Lösung von Natriumperoxodisulphat zugegeben und es wurde 5 Minuten unter Aufrechterhaltung dieser Temperatur gerührt. Danach wurde Zulauf 1 und 2 gestartet, Zulauf 1 wurde in 180 und Zulauf 2 in 210 Minuten zudosiert. Nach Ende von Zulauf 2 wurde 30 Minuten nachpolymerisiert, dann wurde gekühlt auf 75°C und anschließend Zulauf 3 und 4 parallel in 60 Minuten zudosiert. Anschließend wurde Zulauf 5 gestartet und innerhalb von 30 Minuten zudosiert.

Zulauf 1 (homogene Mischung aus):

| | |
|---|---|
| 436,1 g | entionisiertem Wasser |
| 50,0 g | Emulan® OG (BASF SE) |
| 60,6 g | Disponil® FES 77 (Fa. Cognis, DE) |
| 16,0 g | einer 50 Gew.-%igen wässrigen Lösung von Acrylamid |
| 28,0 g | Acrylsäure |
| 294,2 g | Styrol |
| 619,8 g | n-Butylacrylat |
| 50,0 g | Monomer B4 |

Zulauf 2 (homogene Lösung aus):

| | |
|---|---|
| 30,5 g | entionisiertem Wasser und |
| 2,3 g | Natriumperoxodisulfat |

Zulauf 3:

18,0 g einer 10.-%igen wässrigen Lösung von t-Butylhydroperoxid

Zulauf 4 (homogene Mischung aus):

| | |
|---|---|
| 13,5 g | entionisiertem Wasser und |
| 1,5 g | Ascorbinsäure |

Zulauf 5:

14,0 g einer 5 gew.-%igen wässrigen Lösung von Wasserstoffperoxid

Nach Beendigung des Zulaufs 5 wurden 14,8 g einer 25 gew.-%igen Ammoniaklösung zugegeben.

Anschließend wurde die erhaltene wässrige Polymerisatdispersion auf Raumtemperatur abgekühlt. Bei einer Temperatur von 60°C wurde 1,5 g Benzophenon zugegeben. Zum Schluss wurde die Dispersion über ein 125 μm Filter filtriert.

Die erhaltenen 2040,2 g der wässrigen Polymerisatdispersion wiesen einen Feststoffgehalt von 51,8 Gew.-% und einen pH-Wert von 7,2 auf. Die mit entionisiertem Wasser verdünnte wässrige Polymerisatdispersion hatte einen gewichtsmittleren Teilchendurchmesser von 143 nm.

Vergleichsbeispiel 1 (VB 1)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 307,9 g | entionisiertes Wasser und |
| 41,9 g | einer 33 Gew.-%igen wässrigen Lösung von einer Polystyrol-Saatdispersion |

vorgelegt und unter Rühren auf 85°C aufgeheizt. Bei Erreichung dieser Temperatur wurde 39,6 g einer 1,8 Gew.-%igen wässrigen Lösung von Natriumperoxodisulphat zugegeben und es wurde 5 Minuten unter Aufrechterhaltung dieser Temperatur gerührt. Danach wurde Zulauf 1 und 2 gestartet, Zulauf 1 wurde in 180 und Zulauf 2 in 210 Minuten zudosiert. Nach Ende von Zulauf 2 wurde 30 Minuten nachpolymerisiert, dann wurde gekühlt auf 75°C und anschließend Zulauf 3 und 4 parallel in 60 Minuten zudosiert. Anschließend wurde Zulauf 5 gestartet und innerhalb von 30 Minuten zudosiert.

Zulauf 1 (homogene Mischung aus):

| | |
|---|---|
| 436,1 g | entionisiertem Wasser |
| 50,0 g | Emulan® OG |
| 60,6 g | Disponil® FES 77 |
| 16,0 g | einer 50 Gew.-%igen wässrigen Lösung von Acrylamid |
| 28,0 g | Acrylsäure |
| 294,2 g | Styrol |
| 619,8 g | n-Butylacrylat |
| 50,0 g | Monomer B4 |

Zulauf 2 (homogene Lösung aus):

| | |
|---|---|
| 30,5 g | entionisiertem Wasser und |
| 2,3 g | Natriumperoxodisulfat |

Zulauf 3:

| | |
|---|---|
| 18,0 g | einer 10 Gew.-%igen wässrigen Lösung von t-Butylhydroperoxid |

Zulauf 4 (homogene Mischung aus):

| | |
|---|---|
| 13,5 g | entionisiertem Wasser und |
| 1,5 g | Ascorbinsäure |

Zulauf 5:

| | |
|---|---|
| 14,0 g | einer 5 Gew.-%igen wässrigen Lösung von Wasserstoffperoxid |

Nach Beendigung des Zulaufs 5 wurden 14,8 g einer 25 Gew.-%igen Ammoniaklösung zugegeben.

Anschließend wurde die erhaltene wässrige Polymerisatdispersion auf Raumtemperatur abgekühlt. Zum Schluß wurde die Dispersion über ein 125 μm Filter filtriert.

Die erhaltene 2038,7 g der wässrigen Polymerisatdispersion wies einen Feststoffgehalt von 51,3 Gew.-% und einen pH-Wert von 7,2 auf. Die mit entionisiertem Wasser verdünnte wässrige Polymerisatdispersion hatte einen gewichtsmittleren Teilchendurchmesser von 143 nm.

Vergleichsbeispiel 2 (VB 2)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 307,9 g | entionisiertes Wasser und |
| 41,9 g | einer 33 Gew.-%igen wässrigen Lösung von einer Polystyrol-Saatdispersion |

vorgelegt und unter Rühren auf 85°C aufgeheizt. Bei Erreichung dieser Temperatur wurde 39,6 g einer 1,8 gew.-%igen wässrigen Lösung von Natriumperoxodisulphat zugegeben und es wurde 5 Minuten unter Aufrechterhaltung dieser Temperatur gerührt. Danach wurde Zulauf 1 und 2 gestartet, Zulauf 1 wurde in 180 und Zulauf 2 in 210 Minuten zudosiert. Nach Ende von Zulauf 2 wurde 30 Minuten nachpolymerisiert, dann wurde gekühlt auf 75°C und anschließend Zulauf 3 und 4 parallel in 60 Minuten zudosiert. Anschließend wurde Zulauf 5 gestartet und innerhalb von 30 Minuten zudosiert.

Zulauf 1 (homogene Mischung aus):

| | |
|---|---|
| 436,1 g | entionisiertem Wasser |
| 50,0 g | Emulan® OG |
| 60,6 g | Disponil® FES 77 |
| 16,0 g | einer 50 Gew.-%igen wässrigen Lösung von Acrylamid |
| 28,0 g | Acrylsäure |
| 294,2 g | Styrol |
| 669,8 g | n-Butylacrylat |

Zulauf 2 (homogene Lösung aus):

| | |
|---|---|
| 30,5 g | entionisiertem Wasser und |
| 2,3 g | Natriumperoxodisulfat |

Zulauf 3:

| | |
|---|---|
| 18,0 g | einer 10 Gew.-%igen wässrigen Lösung von t-Butylhydroperoxid |

Zulauf 4 (homogene Mischung aus):

| | |
|---|---|
| 13,5 g | entionisiertem Wasser und |
| 1,5 g | Ascorbinsäure |

Zulauf 5:

| | |
|---|---|
| 14,0 g | einer 5 Gew.-%igen wässrigen Lösung von Wasserstoffperoxid |

Nach Beendigung des Zulaufs 5 wurde 14,8 g einer 25 Gew.-%igen Ammoniaklösung zugegeben.

Anschließend wurde die erhaltene wässrige Polymerisatdispersion auf Raumtemperatur abgekühlt. Bei einer Temperatur von 60°C wurde 1,5 g Benzophenon zugegeben. Zum Schluß wurde die Dispersion über ein 125 $\mu$m Filter filtriert.

Die erhaltene 2040,2 g der wässrigen Polymerisatdispersion wies einen Feststoffgehalt von 51,5 Gew.-% und einen pH-Wert von 7,5 auf. Die mit entionisiertem Wasser verdünnte wässrige Polymerisatdispersion hat einen gewichtsmittleren Teilchendurchmesser von 136 nm.

Monomer B1

(Herstellung einer Mischung von Methacryloyloxy-2-ethyl-fettsäureamiden)

In einem Vierhalsrundkolben, der mit einem Säbelrührer mit Rührhülse und Rührmotor, Stickstoffeinleitung, Sumpfthermometer und einer Destillationsbrücke ausgestattet war, wurden 206,3 g (0,70 mol) Fettsäuremethylestermischung, 42,8 g (0,70 mol) Ethanolamin und 0,27 g (0,26 %) LiOH vorgelegt. Die Fettsäuremethylestermischung umfasste 6 Gew.-% gesättigte C12 bis C16 Fettsäuremethylester, 2,5 Gew.-% gesättigte C17 bis C20 Fettsäuremethylester, 52 Gew.-% einfach ungesättigte C18 Fettsäuremethylester, 1 ,5 Gew.-% einfach ungesättigte C20 bis C24 Fettsäuremethylester, 36 Gew.-% mehrfach ungesättigte C18 Fettsäuremethylester, 2 Gew.-% mehrfach ungesättigte C20 bis C24 Fettsäuremethylester.

Das Reaktionsgemisch wurde auf 150°C aufgeheizt. Innerhalb von 2h wurden 19,5 ml Methanol abdestilliert. Das erhaltene Reaktionsprodukt enthielt 86,5% Fettsäureethanolamide. Das erhaltene Reaktionsgemisch wurde ohne Aufreinigung weiterverarbeitet.

Nach dem Abkühlen wurden 1919 g (19,2 mol) Methylmethacrylat, 3,1 g LiOH und ein Inhibitor-gemisch bestehend aus 500 ppm Hydrochinonmonmethylether und 500 ppm Phenothiazin zugegeben.

Unter Rühren wurde die Reaktionsapparatur 10 Minuten mit Stickstoff gespült. Danach wurde das Reaktionsgemisch zum Sieden erhitzt. Das Methylmethacrylat/MethanolAzeotrop wurde abgetrennt und anschließend die Kopftemperatur schrittweise auf 100°C angehoben. Nach Beendigung der Reaktion wurde das Reaktionsgemisch auf ca. 70°C abgekühlt und filtriert. Am Rotationsverdampfer wurde überschüssiges Methylmethacrylat abgetrennt. Es konnten 370 g Produkt erhalten werden.

Monomer B2

In einem Vierhalsrundkolben, der mit einem Säbelrührer mit Rührhülse und Rührmotor, Stickstoffeinleitung, Sumpfthermometer und einer Destillationsbrücke ausgestattet war, wurden 206,3 g (0,70 mol) Fettsäuremethylestermischung, 42,8 g (0,70 mol) Ethanolamin und 0,27 g (0,26 %) LiOH vorgelegt. Die Fettsäuremethylestermischung umfasste 6 Gew.-% gesättigte C12 bis C16 Fettsäuremethylester, 2,5 Gew.-% gesättigte C17 bis C20 Fettsäuremethylester, 52 Gew.-% einfach ungesättigte C18 Fettsäuremethylester, 1 ,5 Gew.-% einfach ungesättigte C20 bis C24 Fettsäuremethylester, 36 Gew.-% mehrfach ungesättigte C18 Fettsäuremethylester, 2 Gew.-% mehrfach ungesättigte C20 bis C24 Fettsäuremethylester.

Das Reaktionsgemisch wurde auf 150°C aufgeheizt. Innerhalb von 2h wurden 19,5 ml Methanol abdestilliert. Das erhaltene Reaktionsprodukt enthielt 86,5% Fettsäureethanolamide. Das erhaltene Reaktionsgemisch wurde ohne Aufreinigung weiterverarbeitet. Nach Zugabe eines Inhibitorgemisches 500 ppm Hydrochinonmonmethylether und 500 ppm Phenothiazin wurden 108 g (0,70 mol) Methacrylsäureanhydrid bei einer Sumpftemperatur von 80°C langsam zudosiert. Das Reaktionsgemisch wurde auf 90°C aufgeheizt und 6h bei dieser Temperatur gerührt. Die entstandene

Methacrylsäure wurde am Dünnfilmverdampfer abgetrennt. Es wurde ein braunes, flüssiges Produkt erhalten.

Monomer B3 (Methacryloyloxy-2-hydroxypropyl-linolsäureester)

Monomer B3 wurde durch Umsetzung von Linolsäure mit Glycidylmethacrylat erhalten.

Monomer B4 (Methacryloyloxy-2-hydroxypropylölsäureester)

Monomer B4 wurde durch Umsetzung von Ölsäure mit Glycidylmethacrylat erhalten.

Herstellung der Anstrichmittel

| Formulierung: | | ohne Trockenstoff | mit Trockenstoff |
|---|---|---|---|
| Wasser | | 100 | 100 |
| Pigmentverteiler® A | Dispergiermittel der Fa. BASF SE | 5 | 5 |
| Parmetol® A26 | Konservierungsmittel der Fa. Schülke&Mayr | 2 | 2 |
| Byk® 023 | Entschäumer der Fa. Byk | 2 | 2 |
| Propylenglykol | Lösemittel | 20 | 20 |
| Butyldiglykol | Lösemittel | 15 | 15 |
| Ammoniak, konz. | | 2 | 2 |
| Collacral® LR 8990, 40%ig | Verdicker der Fa. BASF SE | 4 | 4 |
| Natrosol® 250HR | Verdicker der Fa. Hercules Inc. | 3 | 3 |
| ... der Reihe nach zugeben und kurz dispergieren ... | | | |
| Titandioxid Kronos® RN 2190 | Pigment der Fa. Kronos International Inc. | 125 | 125 |
| Omyacarb® 5 GU | Füllstoff der Fa. Omya | 240 | 240 |
| ... der Reihe nach zugeben und 15 Min. mit einem Zahnscheibenrührer bei 1000 UpM dispergieren ... | | | |
| Dispersion (51,8%) | | 454 | 454 |
| Byk® 023 | Entschäumer der Fa. Byk | 4 | 4 |
| Wasser | | 24 | 24 |
| Additol® VXW 4940 | Trockenstoff (Sikkativ) der Fa. Cytec | - | 0,39 |
| Gesamtmenge: | | 1000 | 1000 |

Die Bestandteile wurden in der o.a. Reihenfolge unter Rühren zugegeben. Die Farben wurden 24 h bei Raumtemperatur reifen lassen.

Verarbeitung und Prüfung

Faserzementplättchen wurden vor dem Beschichten zunächst gewässert, nass abgebürstet und getrocknet. Die Anstrichmittel wurden in je 2 Schichten (16 h Zwischentrocknung) mit jeweils 500 g/m2 mit dem Pinsel aufgetragen. Die Beschichtungen wurde 3 d bei 23 °C, 50 % relativer Feuchte getrocknet. Dann wurden mit Hilfe eines Color guide 45/0 der Fa. Byk Gardner die farbmetrischen Kennzahlen L, a und b bestimmt (Normlicht C 2).

Die Prüfkörper wurden in einem Xenotest 1200 Bewitterungsgerät wie oben angegeben 48 h bewittert. Nach Bewitterung wurden die Probekörper getrocknet. Dann wurde Aktivkohle trocken deckend aufgestreut. Überschüssige Aktivkohle wurde durch Klopfen auf die Kante bzw. mit Druckluft entfernt. Die angeschmutzten Prüfkörper wurden anschließend in Wasser getaucht, mit jeweils 1 l fließendem Wasser abgespült und schließlich mit einem nassen Schwamm ohne Druck dreimal abgewischt. Nach Trocknung wurden wie oben die farbmetrischen Kennzahlen der angeschmutzten Fläche und die Differenz $\Delta$ E zum Ausgangswert vor Bewitterung und Verschmutzung bestimmt.

Darüber hinaus wurden die angeschmutzten Probekörper nebeneinander gelegt und der Verschmutzungsgrad mit Schulnoten bewertet (0=weiß, 5=schwarz).

| Probe | Monomer B4 | Photoinitiator (Komponente C) | Sikkativ | | | Nach 3d RT + 6 h Xenotest | |
|---|---|---|---|---|---|---|---|
| | | | | | | ΔE | Schulnote |
| B 1 | Ja | Ja | Nein | | | 5,5 | 2 |
| | Ja | Ja | Ja | | | 6,5 | 2 |
| VB 1 | Ja | Nein | Nein | | | 22,8 | 4 - 5 |
| | Ja | Nein | Ja | | | 14,6 | 4 |
| VB2 | Nein | Ja | Nein | | | 12,8 | 3 - 4 |

Aus den Werten geht klar hervor, dass die Kombination von Monomer B4 und Photoinitiator die Verbesserung der Anschmutzresistenz nach Einwirkung von Licht erzeugt und auch, dass diese Verbesserung signifikant größer ist als wenn nur Photoinitiator eingesetzt wird. Die Zugabe von Sikkativ erzeugt keine Verbesserung.

**Patentansprüche**

**1.** Anstrichmittel enthaltend

(i) 20 bis 80 Gew.-% eines wässrigen Emulsionspolymerisates enthaltend

(A) Monomere A , die ausgewählt sind aus der Gruppe Estern α,β-ethylenisch ungesättigter Mono- und Dicarbonsäuren mit $C_1$-$C_{20}$-Alkanolen, Vinylaromaten, Estern von Vinylalkohol mit $C_1$-$C_{30}$-Monocarbonsäuren, ethylenisch ungesättigten Nitrilen, Vinylhalogeniden, Vinylidenhalogeniden, monoethylenisch ungesättigten Carbon- und Sulfonsäuren, phosphorhaltigen Monomeren, Estern α,β-ethylenisch ungesättigter Mono- und Dicarbonsäuren mit $C_2$-$C_{30}$-Alkandiolen, Amiden α,β-ethylenisch ungesättigter Mono- und Dicarbonsäuren mit $C_2$-$C_{30}$-Aminoalkoholen, die eine primäre oder sekundäre Aminogruppe aufweisen, primären Amiden α,β-ethylenisch ungesättigter Monocarbonsäuren und deren N-Alkyl- und N,N-Dialkylderivaten, N-Vinyllactamen, offenkettigen N-Vinylamidverbindungen, Estern von Allylalkohol mit $C_1$-$C_{30}$-Monocarbonsäuren, Estern von α,β-ethylenisch ungesättigten Mono- und Dicarbonsäuren mit Aminoalkoholen, Amiden α,β-ethylenisch ungesättigten Mono- und Dicarbonsäuren mit Diaminen, welche mindestens eine primäre oder sekundäre Aminogruppe aufweisen, N,N-Diallylaminen, N,N-Diallyl-N-alkylaminen, vinyl- und allylsubstituierten Stickstoffheterocyclen, Vinylethern, $C_2$-$C_8$-Monoolefinen, nicht aromatischen Kohlenwasserstoffen mit mindestens zwei konjugierten Doppelbindungen, Polyether(meth)acrylaten, Harnstoffgruppen aufweisenden Monomeren und/oder Mischungen davon.
(B) 0,1 bis 30 Gew.-% mindestens eines (Meth)acrylats mit olefinisch ungesättigten Seitengruppen (Monomere B) sowie
(C) 0,01 bis 5 Gew.-% mindestens eines Photoinitiators

ii. 5 bis 30 Gew.-%, eines oder mehrerer anorganischer Füllstoffe,
iii. 0 bis 5 Gew.-% eines oder mehrerer Verdicker,
iv. 0 bis 30 Gew.-% eines oder mehrerer Pigmente und
v. 0 bis 20 Gew je weitere Hilfsstoffe, wie zum Beispiel Biozide, Dispergiermittel, Filmbildehilfsmittel und Entschäumer,
vi. Wasser,

wobei die Summe der Komponenten i. bis vi. 100 Gew.-% beträgt.

**2.** Anstrichmittel gemäß Anspruch 1, **dadurch gekennzeichnet, dass** die Glasübergangstemperatur ≤60 °C beträgt.

**3.** Anstrichmittel gemäß Anspruch 1, **dadurch gekennzeichnet, dass** die Glasübergangstemperatur ≥-50°C und ≤30 °C beträgt.

**4.** Anstrichmittel gemäß Anspruch 1, **dadurch gekennzeichnet, dass** die Glasübergangstemperatur ≥-50°C und ≤10 °C beträgt.

**5.** Anstrichmittel gemäß Anspruch 1, **dadurch gekennzeichnet, dass** die Glasübergangstemperatur ≥-40C und ≤0 °C beträgt.

**6.** Anstrichmittel gemäß einem der Ansprüche 1 bis 5, **dadurch gekennzeichnet, dass** die Monomere B eine Jodzahl im Bereich von 50 bis 300 g Iod/100g Monomer aufweisen.

**7.** Anstrichmittel gemäß einem der Ansprüche 1 bis 6, **dadurch gekennzeichnet, dass** die Monomere B ausgewählt sind aus der Gruppe Methacryloyloxy-2-ethyl-ölsäureamid, Methacryloyloxy-2-ethyl-linolsäureamid und/oder Methacryloyloxy-2-ethyl-linolensäureamid, sowie Methacryloyloxy-2-hydroxypropyl-linolsäureester und Methacryloyloxy-2-hydroxypropyl-ölsäureester oder Mischungen davon.

**8.** Anstrichmittel gemäß einem der Ansprüche 1 bis 7 als Bindemittel in Anstrichmitteln, **dadurch gekennzeichnet, dass** das Anstrichmittel frei von organischen Lösemitteln ist.

**9.** Anstrichmittel gemäß einem der Ansprüche 1 bis 8 **dadurch gekennzeichnet, dass** das Anstrichmittel für elastische Beschichtungen eingesetzt wird.

**10.** Anstrichmittel gemäß einem der Ansprüche 1 bis 8, **dadurch gekennzeichnet, dass** das Anstrichmittel für Fassadenfarben eingesetzt wird.

## Claims

**1.** A coating material comprising

(i) 20% to 80% by weight of an aqueous emulsion polymer comprising

(A) monomers A which are selected from the group consisting of esters of α,β-ethylenically unsaturated monocarboxylic and dicarboxylic acids with $C_1$-$C_{20}$ alkanols, vinylaromatics, esters of vinyl alcohol with $C_1$-$C_{30}$ monocarboxylic acids, ethylenically unsaturated nitriles, vinyl halides, vinylidene halides, monoethylenically unsaturated carboxylic and sulfonic acids, phosphorus-containing monomers, esters of α,β-ethylenically unsaturated monocarboxylic and dicarboxylic acids with $C_2$-$C_{30}$ alkanediols, amides of α,β-ethylenically unsaturated monocarboxylic and dicarboxylic acids with $C_2$-$C_{30}$ amino alcohols having a primary or secondary amino group, primary amides of α,β-ethylenically unsaturated monocarboxylic acids and the N-alkyl and N,N-dialkyl derivatives thereof, N-vinyllactams, open-chain N-vinylamide compounds, esters of allyl alcohol with $C_1$-$C_{30}$ monocarboxylic acids, esters of α,β-ethylenically unsaturated monocarboxylic and dicarboxylic acids with amino alcohols, amides of α,β-ethylenically unsaturated monocarboxylic and dicarboxylic acids with diamines having at least one primary or secondary amino group, N,N-diallylamines, N,N-diallyl-N-alkylamines, vinyl- and allyl-substituted nitrogen heterocycles, vinyl ethers, $C_2$-$C_8$ monoolefins, nonaromatic hydrocarbons having at least two conjugated double bonds, polyether (meth)acrylates, monomers containing urea groups, and/or mixtures thereof,
(B) 0.1% to 30% by weight of at least one (meth)acrylate with olefinically unsaturated side groups (monomers B), and
(C) 0.01% to 5% by weight of at least one photoinitiator,

ii. 5% to 30% by weight of one or more inorganic fillers,
iii. 0% to 5% by weight of one or more thickeners,
iv. 0% to 30% by weight of one or more pigments, and
v. 0% to 20% by weight each of other auxiliaries, such as, for example, biocides, dispersants, film-forming assistants, and defoamers,
vi. water,

the sum of components i. to vi. being 100% by weight.

**2.** The coating material according to claim 1, wherein the glass transition temperature is ≤60°C.

**3.** The coating material according to claim 1, wherein the glass transition temperature is ≥-50°C, and ≤-30°C.

**4.** The coating material according to claim 1, wherein the glass transition temperature is ≥-50°C, and ≤10°C.

**5.** The coating material according to claim 1, wherein the glass transition temperature is ≥-40°C and ≤-0°C.

**6.** The coating material according to any of claims 1 to 5, wherein the monomers B have an iodine number in the range from 50 to 300 g iodine/100 g monomer.

**7.** The coating material according to any of claims 1 to 6, wherein the monomers B are selected from the group consisting of methacryloyloxy-2-ethyloleamide, methacryloyloxy-2-ethyllinoleamide and/or methacryloyloxy-2-ethyllinolenamide, and also methacryloyloxy-2-hydroxypropyl-linoleic ester and methacryloyloxy-2-hydroxypropyl-oleic ester or mixtures thereof.

**8.** The coating material according to any of claims 1 to 7, wherein the coating material is free from organic solvents.

**9.** The coating material according to any of claims 1 to 8, wherein the coating material is used for elastic coatings.

**10.** The coating material according to any of claims 1 to 8, wherein the coating material is used for exterior architectural paints.

**Revendications**

**1.** Peinture contenant

(i) 20 à 80 % en poids d'un polymérisat en émulsion aqueuse, contenant

(A) des monomères A qui sont choisis dans le groupe constitué par des esters d'acides mono- et dicarboxyliques à insaturation α,β-éthylénique avec des alcanols en $C_1$-$C_{20}$, des composés vinylaromatiques, des esters d'alcool vinylique avec des acides monocarboxyliques en $C_1$-$C_{30}$, des nitriles à insaturation éthylénique, des halogénures de vinyle, des halogénures de vinylidène, des acides carboxyliques et sulfoniques à insaturation monoéthylénique, des monomères phosphorés, des esters d'acides mono- et dicarboxyliques à insaturation α,β-éthylénique avec des alcanediols en $C_2$-$C_{30}$, des amides d'acides mono- et dicarboxyliques à insaturation α,β-éthylénique avec des aminoalcools en $C_2$-$C_{30}$ qui comportent un groupe amino primaire ou secondaire, des amides primaires d'acides monocarboxyliques à insaturation α,β-éthylénique et leurs dérivés N-alkyle et N,N-dialkyle, des N-vinyllactames, des composés N-vinylamide à chaîne ouverte, des esters d'alcool allylique avec des acides monocarboxyliques en $C_1$-$C_{30}$, des esters d'acides mono- et dicarboxyliques à insaturation α,β-éthylénique avec des aminoalcools, des amides d'acides mono- et dicarboxyliques à insaturation α,β-éthylénique avec des diamines qui comportent au moins un groupe amino primaire ou secondaire, des N,N-diallylamines, des N,N-diallyl-N-alkylamines, des hétérocycles azotés substitués par vinyle et allyle, des éthers vinyliques, des mono-oléfines en $C_2$-$C_8$, des hydrocarbures non aromatiques comportant au moins deux doubles liaisons conjuguées, des polyéther(méth)acrylates, des monomères comportant des groupes urée et/ou des mélanges de ceux-ci,
(B) 0,1 à 30 % en poids d'au moins un (méth)acrylate comportant des groupes latéraux à insaturation oléfinique (monomères B) ainsi que
(C) 0,01 à 5 % en poids d'au moins un photoamorceur,

(ii) 5 à 30 % en poids d'une ou de plusieurs charges inorganiques,
(iii) 0 à 5 % en poids d'un ou de plusieurs épaississants,
(iv) 0 à 30 % en poids d'un ou de plusieurs pigments et
(v) 0 à 20 % en poids chacun d'autres adjuvants, comme par exemple des biocides, des dispersants, des adjuvants filmogènes et des antimousses,
(vi) de l'eau,

la somme des composants i. à vi. étant égale à 100 % en poids.

**2.** Peinture selon la revendication 1, **caractérisée en ce que** la température de transition vitreuse est ≤ 60 °C.

3. Peinture selon la revendication 1, **caractérisée en ce que** la température de transition vitreuse est ≥ -50 °C et ≤ 30 °C.

4. Peinture selon la revendication 1, **caractérisée en ce que** la température de transition vitreuse est ≥ -50 °C et ≤ 10 °C.

5. Peinture selon la revendication 1, **caractérisée en ce que** la température de transition vitreuse est ≥ -40 °C et ≤ 0 °C.

6. Peinture selon l'une quelconque des revendications 1 à 5, **caractérisée en ce que** les monomères B présentent un indice d'iode dans la plage de 50 à 300 g d'iode/100 g de monomère.

7. Peinture selon l'une quelconque des revendications 1 à 6, **caractérisée en ce que** les monomères B sont choisis dans le groupe constitué par le méthacryloyloxy-2-éthyl-oléylamide, le méthacryloyl-oxy-2-éthyl-linoléylamide et/ou le méthacryloyloxy-2-éthyl-linolénylamide, ainsi que le linoléate de méthacryloyloxy-2-hydroxypropyle et l'oléate de méthacryloyloxy-2-hydroxypropyle ou des mélanges de ceux-ci.

8. Peinture selon l'une quelconque des revendications 1 à 7, **caractérisée en ce que** la peinture est exempte de solvants organiques.

9. Peinture selon l'une quelconque des revendications 1 à 8, **caractérisée en ce que** la peinture est utilisée pour des revêtements élastiques.

10. Peinture selon l'une quelconque des revendications 1 à 8, **caractérisée en ce que** la peinture est utilisée pour la peinture de façades.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3320198 A
- EP 10000 A
- EP 522789 A
- EP 1147139 A
- EP 1845142 A
- US 5066520 A
- EP 890621 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- DE 19609509 A
- EP 690882 A
- EP 710680 A
- EP 1125949 A
- EP 1294816 A
- EP 1614732 A
- WO 0329300 A
- WO 9925780 A
- US 4733005 A
- WO 2009047234 A
- WO 2009146995 A
- DE 4105134 A
- DE 2513516 A
- DE 2638544 A
- US 5750751 A
- EP 417568 A


### In der Beschreibung aufgeführte Nicht-Patentliteratur


- **VON B.G. BUFKIN ; J.R. GRAWE.** *J. Coatings Tech.,* 1978, vol. 50 (644), 83
- Encyclopedia of Polymer Science and Engineering. John Wiley & Sons, Inc, 1987, vol. 8, 659-677
- **D.C. BLACKLEY.** Emulsion Polymerisation. Applied Science Publishers, Ltd, 1975, 155-465
- **D.C. BLACKLEY.** Polymer Latices. Chapman & Hall, 1997, vol. 1, 33-415
- **H. WARSON.** The Applications of Synthetic Resin Emulsions. Ernest Benn, Ltd, 1972, 49-244
- **J. PIIRMA.** Emulsion Polymerisation. Academic Press, 1982, 1-287
- **F. HÖLSCHER.** Dispersionen synthetischer Hochpolymerer. Springer-Verlag, 1969, 1-160
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **H. STACHE.** Tensid-Taschenbuch. Carl-Hanser-Verlag, 1981
- Emulsifiers & Detergents. MC Publishing Company, 1989
- **J. BRANDRUP ; E.H. IMMERGUT.** Polymerhandbook. John Wiley & Sons, 1989, 133-141
- *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989